## Europäisches Patentamt

## European Patent Office

## Office européen des brevets

(19)

(11) Veröffentlichungsnummer: **0 005 568**
B1

(12)

# EUROPÄISCHE PATENTSCHRIFT

(45) Veröffentlichungstag der Patentschrift:
**23.09.81**

(51) Int. Cl.³: **B 60 T 17/22**, B 60 T 8/00

(21) Anmeldenummer: **79200219.8**

(22) Anmeldetag: **07.05.79**

---

(54) **Vorrichtung zur Ueberwachung des Gleitschutzes an einem Fahrzeug.**

---

(30) Priorität: **18.05.78 CH 5379/78**

(43) Veröffentlichungstag der Anmeldung:
**28.11.79 Patentblatt 79/24**

(45) Bekanntmachung des Hinweises auf die Patenterteilung:
**23.09.81 Patentblatt 81/38**

(84) Benannte Vertragsstaaten:
**AT BE CH DE FR GB IT NL SE**

(56) Entgegenhaltungen:
**DE-A-2 644 037**
**FR-A-2 240 129**
**US-A-3 450 944**
**US-A-3 681 760**
**US-A-3 680 923**
**US-A-3 702 206**
**US-A-3 803 425**

(73) Patentinhaber: **Werkzeugmaschinenfabrik Oerlikon-Bührle AG, Birchstrasse 155, CH-8050 Zürich (CH)**

(72) Erfinder: **Blaser, Heinz, Ing.HTL, Kirchweg 46, CH-8102 Oberengstringen (CH)**

BUNDESDRUCKEREI BERLIN

Vorrichtung zur Überwachung des Gleitschutzes an einem Fahrzeug

Die Erfindung betrifft eine Vorrichtung zur Überwachung des Gleitschutzes an einem Fahrzeug, insbesondere einem Schienenfahrzeug, bei dem an den Fahrzeugachsen Geschwindigkeitsgeber angeordnet sind. Bei einer bekannten Vorrichtung dieser Art (siehe US-PS 3 803 425) wird ein Fehler angezeigt, wenn einer von zwei Geschwindigkeitsgebern einer Bremsvorrichtung ausfällt. Diese Vorrichtung enthält zwei Vergleichsorgane zum Vergleichen der Angaben der beiden Geschwindigkeitsgeber mit je einer gegebenen Referenz. Wenn die Angabe des einen Geschwindigkeitsgebers die zugehörige Referenz überschreitet, so wird ein Signal erzeugt, um die Referenz des anderen Geschwindigkeitsgebers auf einen neuen Wert umzuschalten. Ein Fehler wird nun gemeldet, wenn der eine Geschwindigkeitsgeber die neue Referenz überschreitet und der andere Geschwindigkeitsgeber diesen neuen Wert nicht überschreitet.

Der Erfindung liegt die Aufgabe zugrunde, diese bekannte Überwachungsvorrichtung durch zusätzliche Überwachungsorgane zu ergänzen und ihre Zuverlässigkeit zu verbessern.

Die erfindungsgemäße Vorrichtung ist dadurch gekennzeichnet, daß jeden Geschwindigkeitsgeber ($G_1 - G_4$) ein erster, auf eine kleine Geschwindigkeit ($v_1$) ansprechender Geschwindigkeits-Detektor ($D_1 - D_4$) und ein zweiter, auf eine größere Geschwindigkeit ($v_2$) ansprechender Geschwindigkeits-Detektor ($D'_1 - D'_4$) zugeordnet ist, daß jeder erste Geschwindigkeits-Detektor ($D_1 - D_4$) an je ein logisches Netzwerk ($L_1 - L_4$) angeschlossen ist und alle zweiten Geschwindigkeitsdetektoren ($D'_1 - D'_4$) an sämtliche logische Netzwerke ($L_1 - L_4$) angeschlossen sind, und daß die logischen Netzwerke ein Ausgangssignal an je einen zugeordneten Fehlerspeicher ($F_1 - F_4$) liefern, wenn der zugeordnete erste Geschwindigkeits-Detektor ($D_1 - D_4$) nicht anspricht und gleichzeitig ein beliebiger der zweiten Geschwindigkeits-Detektoren ($D'_1 - D'_4$) anspricht.

Ein Ausführungsbeispiel der erfindungsgemäßen Vorrichtung ist anhand der beigefügten Zeichnung im folgenden ausführlich beschrieben. Es zeigt

Fig. 1 eine schematische Darstellung der gesamten Vorrichtung und

Fig. 2 einen detaillierten Ausschnitt aus Fig. 1 in schematischer Darstellung.

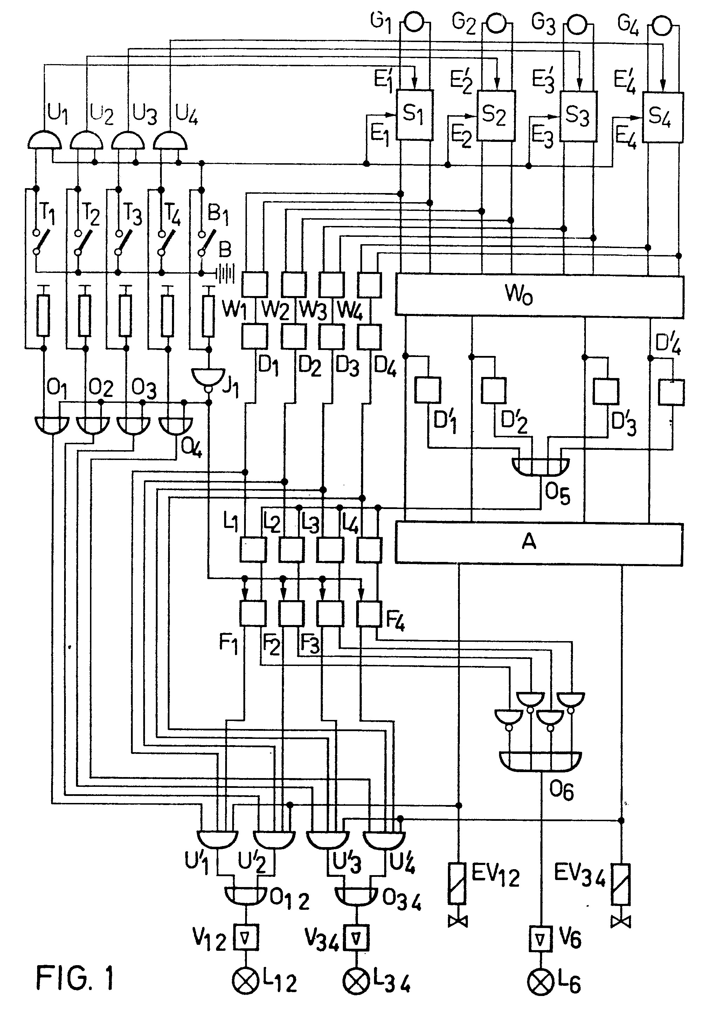

Gemäß Fig. 1 sind vier Tachogeneratoren $G_1$, $G_2$, $G_3$ und $G_4$ vorhanden, die in nicht dargestellter Weise an den Achsen eines Fahrzeuges befestigt sind, um die Drehzahl der Fahrzeugräder zu messen. Diese vier Tachogeneratoren $G_1 - G_4$ sind an vier Prüfschalter $S_1$, $S_2$, $S_3$ und $S_4$ angeschlossen.

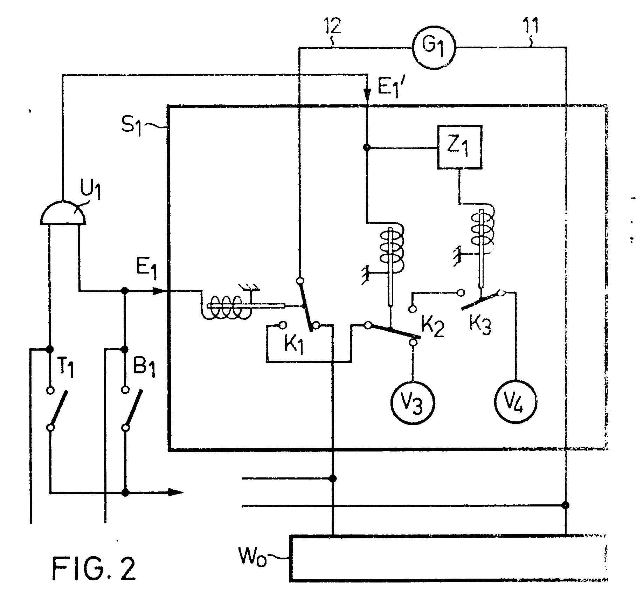

Der Aufbau dieser vier Prüfschalter $S_1 - S_4$ ist aus Fig. 2 ersichtlich. Da diese vier Prüfschalter alle gleich ausgebildet sind, ist in Fig. 2 nur ein einziger Tachogenerator $G_1$ mit dem dazugehörigen Prüfschalter $S_1$ dargestellt. Gemäß Fig. 2 ist der Tachogenerator $G_1$ über einen ersten Draht 11, der durch den Prüfschalter $S_1$ hindurchgeführt ist, ständig mit einem Signalwandler $W_0$ verbunden. Ferner ist der Tachogenerator $G_1$ über einen zweiten Draht 12 und einem ersten Kontakt $K_1$, der sich im Innern des Prüfschalters $S_1$ befindet, ebenfalls mit dem Signalwandler $W_0$ verbunden, solange der erste Kontakt $K_1$ sich in der in Fig. 2 gezeigten Stellung befindet. Der Kontakt $K_1$ ist mit Hilfe einer Prüftaste $B_1$ umschaltbar, wodurch der Tachogenerator $G_1$ über den Draht 12, den ersten Kontakt $K_1$ und einen zweiten Kontakt $K_2$ mit einem Prüfsignalgeber $V_3$ verbunden, solange der zweite Kontakt $K_2$ sich in der in Fig. 2 gezeigten Stellung befindet. Der zweite Kontakt $K_2$ ist mit Hilfe der Prüftaste $B_1$ und einer weiteren Prüftaste $T_1$ sowie einem UND-Gatter $U_1$ umschaltbar, wodurch der Tachogenerator $G_1$ über den Draht 12, den ersten Kontakt $K_1$, den zweiten Kontakt $K_2$ und einem dritten Kontakt $K_3$ mit einem zweiten Prüfsignalgeber $V_4$ verbunden ist, sobald der dritte Kontakt $K_3$ durch ein Zeitrelais $Z_1$ geschlossen wird. Das Zeitrelais $Z_1$ ist ebenfalls mit dem UND-Gatter $U_1$ verbunden und ist somit zusammen mit dem zweiten Kontakt $K_2$ einschaltbar. Die Prüfsignalgeber $V_3$ und $V_4$ simulieren je eine Geschwindigkeit $v_3$ bzw. $v_4$.

Gemäß Fig. 1 sind die vier Prüfschalter $S_1 - S_4$ nicht nur an den Signalwandler $W_0$ für den Gleitschutz angeschlossen, sondern jeder einzelne Prüfschalter $S_1 - S_4$ ist an je einen zugeordneten Signalwandler $W_1$, $W_2$, $W_3$ und $W_4$ für die Geberüberwachung angeschlossen. Solange sich die Prüfschalter $S_1 - S_4$ in der in Fig. 2 gezeigten Stellung befinden, sind sie während der Fahrt unwirksam, dies bedeutet, wie beschrieben, daß die Tachogeneratoren $G_1 - G_4$ über die Leitungen 11 und 12 direkt mit dem Signalwandler $W_0$ für den Gleitschutz verbunden sind. Eine Batterie B ist über die genannte Prüftaste $B_1$, eine gemeinsame Leitung und über vier Eingänge $E_1$, $E_2$, $E_3$ und $E_4$ mit den vier Kontakten $K_1$ (Fig. 2) der vier Prüfschalter $S_1 - S_4$ (Fig. 1) verbindbar, zum gleichzeitigen Umschalten der vier Kontakte $K_1$ in den vier Prüfschaltern $S_1 - S_4$. Somit werden alle vier Tachogeneratoren $G_1 - G_4$ gleichzeitig an die Prüfsignalgeber $V_3$ (Fig. 2) — die sich im Innern der Prüfschalter $S_1 - S_4$ befinden — angeschlossen. Die genannte Batterie B ist ferner über vier Prüftasten $T_1$, $T_2$, $T_3$ und $T_4$, über vier UND-Gatter $U_1$, $U_2$, $U_3$ und $U_4$ und über vier weitere Eingänge $E'_1$, $E'_2$, $E'_3$ und $E'_4$, der Prüfschalter $S_1 - S_4$ mit den vier Kontakten $K_2$ verbindbar zum wahlweisen Umschlten eines einzigen der vier Kontakte $K_2$ (Fig. 2). Somit wird jeweils nur ein einziger der Tachogeneratoren $G_1 - G_4$ an einen der Prüfsignalgeber $V_4$ — die sich im Innern der Prüfschalter $S_1 - S_4$ befinden — angeschlossen.

Die vier UND-Gatter $U_1-U_4$ weisen je zwei Eingänge auf, von denen der eine Eingang über die Prüftasten $T_1-T_4$ an die Batterie B anschließbar ist und der andere Eingang über eine gemeinsame elektrische Leitung und die Prüftaste $B_1$ an die Batterie B anschließbar ist. Die UND-Gatter $U_1-U_4$ weisen je einen Ausgang auf, welche über die Eingänge $E'_1-E'_4$ der Prüfschalter $S_1-S_4$ an die Kontakte $K_3$ (Fig. 2) anschließbar sind. Schließlich ist die Batterie B über die vier Prüftasten $T_1-T_4$ an vier EX-ODER-Gatter $O_1, O_2, O_3$ und $O_4$ anschließbar. Analog wie die beschriebenen UND-Gatter $U_1-U_4$ weisen auch die EX-ODER-Gatter $O_1-O_4$ je zwei Eingänge auf, von denen der eine Eingang über die Prüftasten $T_1-T_4$ und der andere Eingang über eine gemeinsame elektrische Leitung, über einen Inverter $J_1$ und über die Prüftaste $B_1$ an die Batterie B anschließbar ist.

Die EX-ODER-Gatter $O_1-O_4$ weisen je einen Ausgang auf, die über je eine elektrische Leitung an vier weitere UND-Gatter $U'_1, U'_2, U'_3$ und $U'_4$ angeschlossen sind. Falls keine der fünf Prüftasten $B_1$ und $T_1-T_4$ betätigt wird, bewirkt der Inverter $J_1$, daß an allen vier EX-ODER-Gattern $O_1-O_4$ und somit auch an je einem Eingang von allen vier UND-Gattern $U'_1-U'_4$ der logische Zustand »1« erscheint. Wird nur die Prüftaste $B_1$ betätigt, dann verschwindet der logische Zustand »1« am einen Eingang der vier UND-Gatter $U'_1-U'_4$. Sobald aber eine der vier Prüftasten $T_1-T_4$ betätigt wird, dann erscheint am einen Eingang des entsprechenden UND-Gatters $U'_1-U'_4$ der logische Zustand »1«.

An die erwähnten vier Signalwandler $W_1-W_4$ sind über je eine elektrische Leitung vier Geschwindigkeits-Detektoren $D_1, D_2, D_3$ und $D_4$ angeschlossen, welche ihrerseits über je eine elektrische Leitung an je einen Eingang der erwähnten UND-Gatter $U'_1-U'_4$ angeschlossen sind. Diese Geschwindigkeits-Detektoren $D_1-D_4$ sprechen auf eine kleine Geschwindigkeit $v_1$ von z. B. 5 km/h an.

An den Signalwandler $W_0$ sind einerseits über je eine elektrische Leitung vier weitere Geschwindigkeits-Detektoren $D'_1, D'_2, D'_3$ und $D'_4$ und anderseits über vier elektrische Leitungen ein Gleitschutz-Auswertegerät A angeschlossen. Das Gleitschutz-Auswertegerät A wird als an sich bekannt vorausgesetzt und ist daher hier nicht näher beschrieben. Die weiteren Geschwindigkeits-Detektoren $D'_1-D'_4$ unterscheiden sich von den zuerst genannten Geschwindigkeits-Detektoren $D_1-D_4$ dadurch, daß sie auf eine etwas größere Geschwindigkeit $v_2$ von z. B. 15 km/h ansprechen. Alle vier weiteren Geschwindigkeits-Detektoren $D'_1-D'_4$ sind über je eine elektrische Leitung an vier Eingänge eines gemeinsamen ODER-Gatters $O_5$ angeschlossen, dessen Ausgang über eine einzige gemeinsame Leitung an die Eingänge von vier logischen Netzwerken $L_1, L_2, L_3$ und $L_4$ angeschlossen ist. Diese logischen Netzwerke $L_1-L_4$ sind ferner über vier elektrische Leitungen an die zuerst genannten Geschwindigkeits-Detektoren $D_1-D_4$ angeschlossen. Diese Anordnung bewirkt, daß am Ausgang des ODER-Gatters $O_5$ ein Signal »1« erscheint, sobald ein einziger der vier Geschwindigkeits-Detektoren $D'_1-D'_4$ eine Geschwindigkeit $v$ größer als $v_2$ signalisiert und diese Information ($v$ größer als $v_2$) wird an alle vier logischen Netzwerke $L_1-L_4$ weitergegeben.

Die Ausgänge der logischen Netzwerke $L_1-L_4$ sind über je eine elektrische Leitung an die Fehler-Speicher $F_1, F_2, F_3$ und $F_4$ angeschlossen. Diese vier Fehler-Speicher $F_1-F_4$ weisen noch je einen zweiten Eingang auf, der über eine gemeinsame Leitung, über den Inverter $J_1$ und über die Prüftaste $B_1$ an die Batterie B angeschlossen ist. Bei der Prüfung der Tachogeneratoren $G_1-G_4$ mit den Prüftasten $B_1$ und $T_1-T_4$ kann somit ein Einfluß der Fehler-Speicher $F_1-F_4$ ausgeschaltet werden. Der Ausgang von jedem Fehler-Speicher $F_1-F_4$ ist einerseits über je eine elektrische Leitung mit den vier Eingängen eines weiteren ODER-Gatters $O_6$ und anderseits über je eine elektrische Leitung mit je einem Eingang der erwähnten UND-Gatter $U'_1-U'_4$ verbunden. Der Ausgang des ODER-Gatters $O_6$ ist über einen Verstärker $V_6$ mit einer Fehler-Lampe $L_6$ verbunden. Die Ausgänge der beiden UND-Gatter $U'_1$ und $U'_2$ sind über ein gemeinsames ODER-Gatter $O_{12}$ und einen Verstärker $V_{12}$ an eine Lampe $L_{12}$ angeschlossen und die Ausgänge der beiden UND-Gatter $U'_3$ und $U'_4$ sind über ein gemeinsames ODER-Gatter $O_{34}$ und einen Verstärker $V_{34}$ an eine Lampe $L_{34}$ angeschlossen.

Das Gleitschutz-Auswertegerät A besitzt zwei Ausgänge, die einerseits über zwei elektrische Leitungen an elektropneumatische Ventile $EV_{12}$ und $EV_{34}$ und anderseits an einen der Eingänge der vier UND-Gatter $U'_1-U'_4$ angeschlossen sind. Die elektropneumatischen Ventile $EV_{12}$ und $EV_{34}$ dienen zum Lösen der Bremsen, sobald die Mindest-Geschwindigkeit der Tachogeneratoren $G_1-G_4$ eine gleitende Achse anzeigt.

Die Wirkungsweise der beschriebenen Einrichtung ist wie folgt:

Solange das Fahrzeug steht, kann die Einrichtung auf ihre Funktionsfähigkeit geprüft werden. Durch Betätigen der Prüftaste $B_1$ wird bei allen Prüfschaltern $S_1-S_4$ der Kontakt $K_1$ betätigt und somit werden alle Tachogeneratoren $G_1-G_4$ an die Prüfsignalgeber $V_3$ in den entsprechenden Prüfschaltern $S_1-S_4$ angeschlossen. Es wird dadurch schnelle Fahrt simuliert, wodurch mindestens einer der Geschwindigkeits-Detektoren $D'_1-D'_4$ die größere Geschwindigkeit $v_2$ anzeigt. Durch Betätigen einer der Prüftasten $T_1-T_4$, z. B. der Taste $T_1$, wird im Prüfschalter $S_1$ (Fig. 2) der Kontakt $K_2$ betätigt und nach einer durch das Zeitrelais $Z_1$ bedingten Verzögerung wird auch der Kontakt $K_3$ betätigt und somit wird der Tachogenerator $G_1$ an den Prüfsignalgeber $V_4$ des Prüfschalters $S_1$ angeschlossen. Es wird dadurch langsame Fahrt simuliert, wodurch der Geschwindigkeits-Detektor $D_1$ die kleinere Geschwindigkeit $v_1$ anzeigt, sofern der Tachogenerator $G_1$ in Ordnung ist.

Durch das Betätigen der Prüftaste $B_1$ wird ferner den UND-Gattern $U_1-U_4$ und den Fehler-Speichern $F_1-F_4$ sowie den EX-ODER-Gattern $O_1-O_4$ Spannung zugeführt, wodurch an einen der beiden Eingänge der UND-Gatter $U_1-U_4$ der logische Zustand »1« und am einen der beiden Eingänge der ODER-Gatter $O_1-O_4$ sowie der Fehler-Speicher $F_1-F_4$ der logische Zustand »0« erzeugt wird. Wird nun zusätzlich zur Prüftaste $B_1$ z. B. noch die Prüftaste $T_1$ betätigt, so wird einerseits der Kontakt $K_1$ des Prüfschalters $S_1$ umgeschaltet und außerdem wird am vorderen Eingang des UND-Gatters $U_1$ und des EX-ODER-Gatters $O_1$ der logische Zustand »1« erzeugt. Da nun an beiden Eingängen des UND-Gatters $U_1$ der logische Zustand »1« erzeugt wurde, wird auch der Kontakt $K_2$ des Prüfschalters $S_1$ umgeschaltet. Da jetzt am einen Eingang des EX-ODER-Gatters $O_1$ der logische Zustand »1« und am anderen Eingang des EX-ODER-Gatters $O_1$ der logische Zustand »0« herrscht, so wird auch im ersten Eingang des anderen UND-Gatters $U'_1$ der logische Zustand »1« erzeugt. Vom Tachogenerator $G_1$ gelangt zuerst das vom Prüfsignalgeber $V_3$ des Prüfschalters $S_1$ erzeugte Signal über den Signalwandler des Gleitschutzes $W_0$ den anderen Geschwindigkeits-Detektor $D'_1$ und das gemeinsame ODER-Gatter $O_5$ zum logischen Netzwerk $L_1$ und anschließend mit zeitlicher Verzögerung das vom Prüfsignalgeber $V_3$ des Prüfschalters $S_1$ erzeugte Signal über den Signalwandler $W_1$ für die Geberüberwachung, den Detektor $D_1$ zum logischen Netzwerk $L_1$. Falls der Tachogenerator $G_1$ in Ordnung ist, wird vom Detektor $D_1$ im zweiten Eingang des UND-Gatters $U'_1$ der logische Zustand »1« erzeugt. Ferner wird, falls der Tachogenerator $G_1$ in Ordnung ist, über das logische Netzwerk $L_1$ und den Fehlerspeicher $F_1$ der logische Zustand »1« im dritten Eingang des weiteren UND-Gatters $U'_1$ erzeugt. Schließlich wird, falls der Tachogenerator $G_1$ in Ordnung ist, über den Signalwandler $W_0$ die Gleitschutzauswertung $A$ im vierten Eingang des UND-Gatters $U'_1$ der logische Zustand »1« erzeugt. Sobald an allen vier Eingängen des UND-Gatters $U'_1$ der logische Zustand »1« erzeugt wurde, wird über das ODER-Gatter $O_{12}$ sowie den Verstärker $V_{12}$ die Lampe $L_{12}$ aufleuchten. Falls jedoch im Tachogenerator $G_1$ oder in einem der Signalwandler $W_0$, $W_1$ oder in einem der Geschwindigkeits-Detektoren $D_1$, $D'_1$ ein Defekt vorhanden ist, so wird statt der Lampe $L_{12}$ die Fehlerlampe $L_6$ aufleuchten. Ist jedoch in der Gleitschutz-Auswertung $A$ ein Defekt vorhanden, dann wird weder die Lampe $L_{12}$ noch die Fehlerlampe $L_6$ aufleuchten.

In der beschriebenen Weise lassen sich mit den Prüftasten $T_2$, $T_3$ und $T_4$ auch die übrigen Tachogeneratoren $G_2$, $G_3$ und $G_4$ bei stillstehendem Zug überprüfen.

Während der Fahrt werden die Tachogeneratoren $G_1-G_4$ wie folgt überwacht:

Die von den Tachogeneratoren $G_1-G_4$ erzeugten Signale werden im Signalwandler $W_0$ für den Gleitschutz sowie in den Signalwandlern $W_1-W_4$ für die Überwachung in eine zur Geschwindigkeit des Fahrzeuges proportionale Gleichspannung umgewandelt. Die Signalwandler $W_1-W_4$ für die Überwachung arbeiten bei einer gewissen Geschwindigkeit im Sättigungsbereich, bis zu dieser Geschwindigkeit wächst die Gleichspannung linear an. Demgegenüber wächst die vom Signalwandler $W_0$ für den Gleitschutz erzeugte Gleichspannung bis zur maximalen Geschwindigkeit des Fahrzeuges linear an.

Sobald das Fahrzeug die kleinere Geschwindigkeit $v_1$ erreicht, sprechen die vier Geschwindigkeits-Detektoren $D_1-D_4$ an und an den ersten Eingängen der logischen Netzwerke $L_1-L_4$ wird der logische Zustand »1« erzeugt. Solange die Geschwindigkeit $v_2$ noch nicht erreicht ist, sprechen die anderen vier Geschwindigkeits-Detektoren $D'_1-D'_4$ noch nicht an und an den zweiten Eingängen der logischen Netzwerke $L_1-L_4$ wird der logische Zustand »0« erzeugt. Die logischen Netzwerke $L_1-L_4$ sind so gebaut, daß in diesem Falle an den Fehler-Speicher $F_1-F_4$ kein Fehlersignal abgegeben wird. Sobald aber die Geschwindigkeit $v_2$ erreicht ist und die anderen vier Geschwindigkeits-Detektoren $D'_1-D'_4$ ansprechen, so wird an beiden Eingängen der logischen Netzwerke $L_1-L_4$ der logische Zustand »1« erzeugt. Auch in diesem Falle darf kein Fehlersignal an den Fehler-Speicher $F_1-F_4$ abgegeben werden. Da bei stillstehendem Fahrzeug an beiden Eingängen der logischen Netzwerke $L_1-L_4$ der logische Zustand »0« erzeugt wird, darf auch in diesem Falle kein Fehlersignal an den Fehler-Speicher $F_1-F_4$ abgegeben werden. Erst wenn während der Fahrt mindestens einer der Geschwindigkeits-Detektoren $D'_1-D'_4$ für die Geschwindigkeit $v_2$ anspricht und ein Tachogenerator $G_1-G_4$ ausfällt, dann wird an einem der ersten Eingänge der logischen Netzwerke $L_1-L_4$ der logische Zustand »0« und an sämtlichen zweiten Eingängen der logische Zustand »1« erzeugt und nur in diesem vierten Falle darf ein Fehlersignal an den Fehler-Speicher $F_1-F_4$ weitergeleitet werden.

Aus diesen Überlegungen ergibt sich für die logischen Netzwerke $L_1-L_4$ folgender Aufbau:

|   | $D_1$ $D_2$ $D_3$ $D_4$ | $D'_1$ $D'_2$ $D'_3$ $D'_4$ | $F_1$ $F_2$ $F_3$ $F_4$ |
|---|---|---|---|
| 1 | 0 | 0 | 0 |
| 2 | 0 | 1 | 1 |
| 3 | 1 | 0 | 0 |
| 4 | 1 | 1 | 0 |

Sobald einer der Fehler-Speicher $F_1-F_4$ ein Fehlersignal erhält, wird über das ODER-Gatter $O_6$ und über den Verstärker $V_6$ die Fehlerlampe $L_6$ aufleuchten.

## Patentansprüche

1. Vorrichtung zur Überwachung des Gleitschutzes an einem Fahrzeug, insbesondere an einem Schienenfahrzeug, bei dem an den Fahrzeug-Achsen Geschwindigkeitsgeber $(G_1-G_4)$ angeordnet sind, dadurch gekennzeichnet,

— daß jedem Geschwindigkeitsgeber $(G_1-G_4)$ ein erster, auf eine kleine Geschwindigkeit $(v_1)$ ansprechender Geschwindigkeits-Detektor $(D_1-D_4)$ und ein zweiter, auf eine größere Geschwindigkeit $(v_2)$ ansprechender Geschwindigkeits-Detektor $(D'_1-D'_4)$ zugeordnet ist,
— daß jeder erste Geschwindigkeits-Detektor $(D_1-D_4)$ an je ein logisches Netzwerk $(L_1-L_4)$ angeschlossen ist und alle zweiten Geschwindigkeitsdetektoren $(D'_1-D'_4)$ an sämtliche logische Netzwerke $(L_1-L_4)$ angeschlossen sind,
— und daß die logischen Netzwerke $(L_1-L_4)$ so geschaltet sind, daß sie ein Ausgangssignal an je einen zugeordneten Fehlerspeicher $(F_1-F_4)$ liefern, wenn der zugeordnete erste Geschwindigkeits-Detektor $(D_1-D_4)$ nicht anspricht und gleichzeitig ein beliebiger der zweiten Geschwindigkeits-Detektoren $(D'_1-D'_4)$ anspricht.

2. Vorrichtung nach Anspruch 1, dadurch gekennzeichnet, daß jedem Geschwindigkeitsgeber $(G_1-G_4)$ ein Prüfschalter $(S_1-S_4)$ mit einer Prüftaste $(T_1-T_4)$ zugeordnet ist, durch die eine Lampe $(L_{12}, L_{34})$ einschaltbar ist, sofern keine der elektrischen Leitungen zwischen Geschwindigkeitsgebern $(G_1-G_4)$; ersten und zweiten Geschwindigkeits-Detektoren $(D_1-D_4)$ und $(D'_1-D'_4)$; Logik-Netzwerken $(L_1-L_4)$; Fehler-Speichern $(F_1-F_4)$ und einer Auswertlogik unterbrochen ist.

## Claims

1. Installation for monitoring the anti-slip protection system on a vehicle, especially on a rail vehicle, in which speed pick-ups $(G_1-G_4)$ are located on the vehicle axles, characterised in that a first speed-detector $(D_1-D_4)$, which responds to a low speed $(v_1)$, and a second speed-detector $(D'_1-D'_4)$, which responds to a higher speed $(v_2)$, are assigned to each speed pick-up $(G_1-G_4)$, that each first speed-detector $(D_1-D_4)$ is connected, in each case, to a logic network $(L_1-L_4)$, and all second speed-detectors $(D'_1-D'_4)$ are connected to all the logic networks $(L_1-L_4)$, and that the logic networks $(L_1-L_4)$ are connected in such a manner that they supply an output signal to a fault-memory device $(F_1-F_4)$ assigned to each logic network, if the assigned first speed-detector $(D_1-D_4)$ does not respond whilst, at the same time, any one of the second speed-detectors $(D'_1-D'_4)$ does respond.

2. Installation according to Claim 1, characterised in that a test-switch $(S_1-S_4)$, with a test key $(T_1-T_4)$, is assigned to each speed pick-up $(G_1-G_4)$, the test key enabling a lamp $(L_{12}, L_{34})$ to be switched on, provided that none of the electrical wires between the speed pickups $(G_1-G_4)$, the first and second speed-detectors $(D_1-D_4)$ and $(D'_1-D'_4)$, the logic networks $(L_1-L_4)$, the fault-memory divices $(F_1-F_4)$, and an evaluating logic unit are interrupted.

## Revendications

1. Dispositif pour la surveillance du dispositif de protection de glissement d'un véhicule notamment d'un véhicule sur rails comportant des générateurs de vitesse $(G_1-G_4)$ sur les essieux du véhicule, caractérisé en ce que:

— à chaque générateur de vitesse $(G_1-G_4)$ est associé un premier détecteur de vitesse $(D_1-D_4)$ sollicité à une petite vitesse $(v_1)$ et un second détecteur de vitesse $(D'_1-D'_4)$ sollicité à une vitesse plus grande $(v_2)$,
— à chaque premier détecteur de vitesse $(D_1-D_4)$ est relié un circuit logique respectif $(L_1-L_4)$ et à tous les seconds détecteurs de vitesse $(D'_1-D'_4)$ sont reliés tous les circuits logiques $(L_1-L_4)$,
— les circuits logiques $(L_1-L_4)$ sont branchés de façon à fournir un signal de sortie à chaque fois une mémoire d'erreur $(F_1-F_4)$ correspondante lorsque le premier détecteur de vitesse $(D_1-D_4)$ correspondant n'est pas mis en oeuvre et en même temps l'un quelconque des seconds détecteurs de vitesse $(D'_1-D'_4)$ est mis en oeuvre.

2. Dispositif selon la revendication 1, caractérisé en ce qu'à chaque générateur de vitesse $(G_1-G_4)$ est associé un commutateur d'essai $(S_1-S_4)$ avec une touche d'essai $(T_1-T_4)$ permettant de brancher une lampe $(L_{12}, L_{32})$ dans la mesure où aucune des lignes électriques entre les générateurs de vitesse $(G_1-G_4)$, les premiers et seconds détecteurs de vitesse $(D_1-D_4)$ et $D'_1-D'_4)$, les circuits logiques $(L_1-L_4)$, les mémoires d'erreur $(F_1-F_4)$ et un circuit logique d'exploitation ne sont coupées.

0 005 568

FIG. 1

FIG. 2